# EUROPÄISCHE PATENTSCHRIFT

(11) **EP 1 542 914 B1**
(45) Veröffentlichungstag und Bekanntmachung des Hinweises auf die Patenterteilung: **26.07.2006**
(21) Anmeldenummer: 03798026.5
(22) Anmeldetag: 18.09.2003
(51) Int. Cl.: B65G 1/04

(54) **REGALBEDIENGERÄT**
SHELF OPERATING DEVICE
TRANSPORTEUR D'EMMAGASINAGE ET DE PRELEVEMENT DESTINE A DES RAYONNAGES

(30) Priorität: 25.09.2002 CH 161502
(43) Veröffentlichungstag der Anmeldung: 22.06.2005
(73) Patentinhaber: Manitec Consulting AG, 6373 Ennetbürgen (CH)
(72) Erfinder: KOLLER, Hans, CH-6048 Horw (CH); MATHYS, Andre, CH-6373 Ennetbürgen (CH)
(74) Vertreter: Groner, Manfred
(86) Internationale Anmeldenummer: PCT/CH2003/000628
(87) Internationale Veröffentlichungsnummer: WO 2004/028930

(56) Entgegenhaltungen:
- DE-A- 3 830 373
- DE-C- 3 324 349
- US-A- 4 394 104

## Beschreibung

Die Erfindung betrifft ein Regalbediengerät zum Ein- und Auslagern von Behältern oder Paletten eines Regals nach dem Oberbegriff des Anspruchs 1.

Regalbediengeräte dieser Art sind zur Lastaufnahme und Lastabgabe in Regalen bekannt. Das Regalbediengerät ist auf einen Fahrzeug angeordnet, das beispielsweise auf Schienen zwischen Regalen horizontal und vertikal verfahrbar ist. Mit dem Regalbediengerät werden Behälter oder Paletten auf das Fahrzeug geladen und vom Fahrzeug am vorgesehenen Lagerplatz des Regals in dieses eingelagert. Wesentlich bei solchen Regalbediengeräten ist eine hohe Durchsatzleistung, eine geringe Platzbeanspruchung sowie eine grösstmögliche Präzision bei der Aufnahme und Abgabe der Behälter bzw. Paletten.

Die US 4,394,104 A offenbart ein Regalbediengerät, das ein endloses Antriebsorgan aufweist, an dem ein Wagen (carriage 14) mit zwei Greifzangen angeordnet sind. Mit diesem Wagen kann ein Behälter ein- und ausgelagert werden. Das Ein- und Auslagern ist aber nur entweder links oder rechts möglich.

Die DE 38 30 373 A offenbart ein automatisch arbeitendes Lager- und Transportsystem, das zum Fassen von Behältern ein zangenartiges Greifmittel aufweist, das an einem Wagen befestigt ist. Die Behälter können lediglich in eine Richtung ein- und ausgelagert werden.

Ein weiteres Regalbediengerät ist durch die WO 01/10751 des Anmelders bekannt geworden. Dieses besitzt Greifarme, die zur Zugrichtung des endlosen Antriebsorgans geneigt sind und die jeweils einen Nocken aufweisen, der zum Fassen eines Behälters oder einer Palette in eine vertikale Nut der Palette einfährt. Beim Fassen des Behälters bzw. der Palette fährt der Nocken von unten in die Nut ein. Bei der Abgabe des Behälters bzw. der Palette fährt der Nocken wieder oben aus der Nut heraus. In der Praxis hat sich das Regalbediengerät an sich ausserordentlich bewährt. Erforderlich ist für dieses Regalbediengerät ein entsprechender Behälter bzw. eine Palette, welcher die genannte entsprechende angepasste Nut aufweist. Bisher übliche Behälter lassen sich hier in der Regel nicht verwenden.

Die EP-A-0 322 313 offenbart ein Regalbediengerät, bei dem ebenfalls ein Greifmittel vorgesehen ist, das an einem äusseren Ende einen Nocken besitzt, der in eine Nut eines Behälters einfährt. Auch bei diesem Regalbediengerät können handelsübliche Behälter oder Paletten nicht verwendet werden. Dies gilt ebenfalls für das Regalbediengerät gemäss der DE-A-195 01 883. Die DE-A-42 33 690 offenbart ein Regalbediengerät, bei dem zum Fassen eines Behälters ein Greifer vollständig in eine Nut des Behälters eingreift. Dieses Regalbediengerät kann lediglich vertikal zwischen eingelagerten Behältern verfahren werden, da es bei einer horizontalen Bewegung mit den Behältern kollidieren würde. Zudem erfordert auch dieses Regalbediengerät einen speziellen Behälter.

Der Erfindung liegt die Aufgabe zugrunde, ein Regalbediengerät der genannten Art zu schaffen, mit dem auch handelsübliche Behälter oder Paletten ein- und ausgelagert werden können. Das Regalbediengerät soll zudem konstruktiv vergleichsweise einfach sein und kostengünstig hergestellt werden können. Trotzdem soll das Regalbediengerät funktionssicher sein.

Die Aufgabe ist bei einem gattungsgemässen Regalbediengerät gemäss Anspruch 1 gelöst. Mit einem solchen Regalbediengerät kann jeder Behälter oder jede Palette bedient werden, die seitlich eine vorstehende Rippe oder Vertiefung aufweist. Die weitaus meisten Behälter weisen wenigstens seitlich solche Rippen auf, die hier als Versteifungsrippe dienen. Grundsätzlich ist hier aber auch eine reibschlüssige Verbindung zum Behälter möglich, sodass auch aussen ebene Behälter ein- und ausgelagert werden können.

Nach der Erfindung weist das Greifmittel zwei im Abstand zueinander gelagerte Arme auf, die beim Fassen und beim Abgeben eines Behälters oder einer Palette eine Schwenkbewegung ausführen. Diese Schwenkbewegung wird gemäss einer Weiterbildung der Erfindung mittels wenigstens einer Schiene gesteuert, die an einem Gestell des Regalbediengerätes befestigt ist. Vorzugsweise sind zwei solche Schienen angeordnet, wobei die eine Schiene das erste Greifmittel und die zweite Schiene das zweite Greifmittel steuert. Das erste Greifmittel fasst den Behälter bzw. die Palette, um es auf das Regalbediengerät zu laden und das zweite Greifmittel schiebt den Behälter vom Regalbediengerät beispielsweise in ein Lager. Befindet sich der Behälter bzw. die Palette auf dem Regalbediengerät, so ist dieser von beiden Greifmitteln geführt.

Nach einer Weiterbildung der Erfindung weist das Greifmittel zwei Greifarme auf, wobei die Bewegung des einen Greifarmes mittels einer Zugstange auf den anderen Greifarm übertragen wird. Beide Greifarme sind zudem vorzugsweise auf einer gemeinsamen Verbindungsstange gelagert. Dies ergibt eine einfache und dennoch stabile und zuverlässige Konstruktion.

Nach einer Weiterbildung der Erfindung weisen die Greifmittel jeweils wenigstens eine Stange auf, die so positioniert ist, dass sie beim Abgeben des Behälters diesen stösst.

Weiter vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine räumliche Ansicht eines erfindungsgemässen Regalbediengerätes mit einem Behälter,
- Figur 2: die Ansicht gemäss Figur 1, jedoch ohne Behälter,

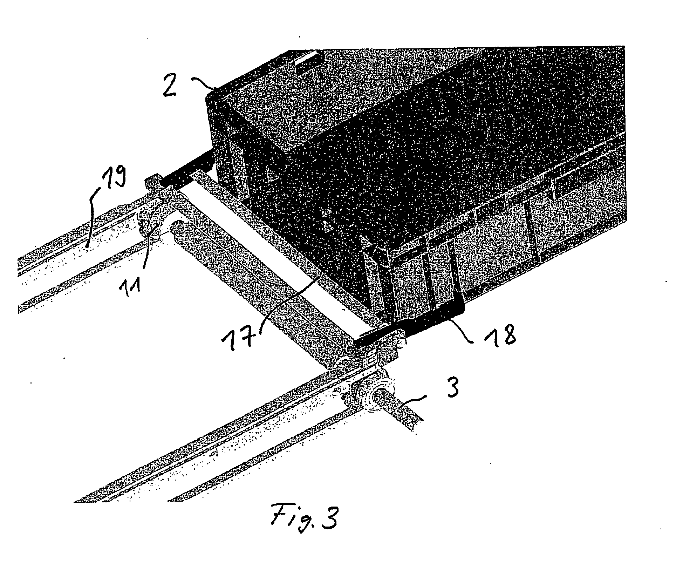

- Figur 3: schematisch das Erfassen eines Behälters,
- Figur 4: eine Frontansicht des Regalbediengerätes mit einem Behälter,
- Figur 5: eine räumliche Ansicht eines Greifmittels,
- Figur 6: eine weitere Ansicht des Greifmittels gemäss Figur 5,
- Figur 7: eine weitere Ansicht des Greifmittels,
- Figur 8: ein Abschnitt eines endlosen Antriebsorgans,
- Figur 9: eine weitere Ansicht des Abschnittes gemäss Figur 8,
- Figur 10: schematisch eine Ansicht des endlosen Antriebsorgans mit zwei Greifmitteln und
- Figuren 11a bis 11e: schematisch einzelne Schritte beim Aufziehen eines Behälters auf das Regalbediengerät.

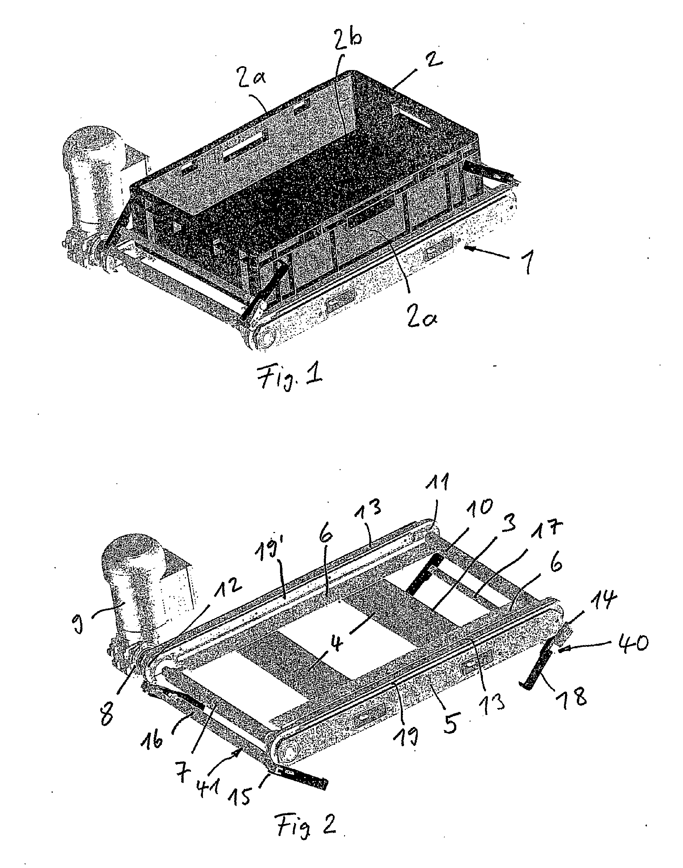

Das in Figur 1 gezeigte Regalbediengerät 1 ist auf einem hier nicht gezeigten Fahrzeug montiert, das zur Aufnahme und Abgabe wenigstens eines Behälters 2 in Gängen eines Regals verfahrbar ist. Das Fahrzeug kann auch mehrere Regalbediengeräte 1, beispielsweise zwei nebeneinander angeordnete Regalbediengeräte 1 aufweisen. In der Figur 1 ist das Regalbediengerät 1 mit einem Behälter 2 beladen. Der Behälter 2 ist ein üblicher Behälter aus Kunststoff und besitzt parallele Seitenwände 2a und einen Boden 2b. Anstelle des Behälters 2 kann das Regalbediengerät 1 auch mit einer hier nicht gezeigten Palette beladen sein. Der Behälter 2 dient zur Aufnahme von hier nicht gezeigten Gütern, die ein- oder auszulagern sind.

Das Regalbediengerät 1 weist gemäss Figur 2 ein Gestell 3 auf, das zwei Traversen 4 besitzt, an denen zwei gegenüberliegende Lagerplatten 5 befestigt sind. An der Lagerplatten 5 ist eine Antriebswelle 7 gelagert, die über ein Getriebe 8 von einem Motor 9, insbesondere einem Elektromotor, angetrieben ist. Weiter ist an den Lagerplatten 5 eine Achse 10 gelagert, auf der zwei Kettenräder 11 befestigt sind, um die jeweils ein endloses Antriebsorgan 13, beispielsweise eine Gliederkette, gelegt ist. Diese beiden Antriebsorgane 13 werden von der Welle 7 angetrieben, die ebenfalls zwei Kettenräder 12 besitzt. Am Gestell 3 sind zudem zwei Gleitschienen 6 befestigt, die im Abstand zueinander angeordnet sind und parallel zueinander verlaufen. Diese Gleitschienen 6 sind im Querschnitt L-förmig ausgebildet und dienen zur Führung des Behälters 2.

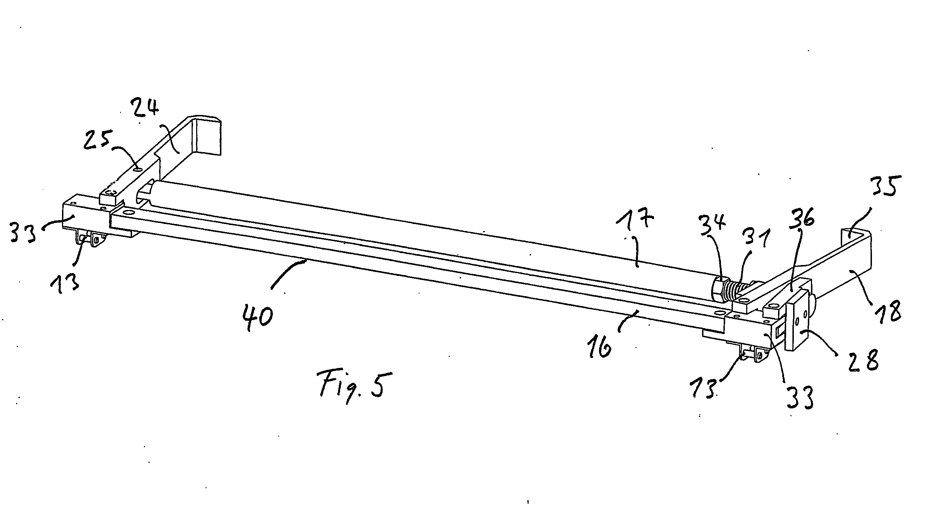

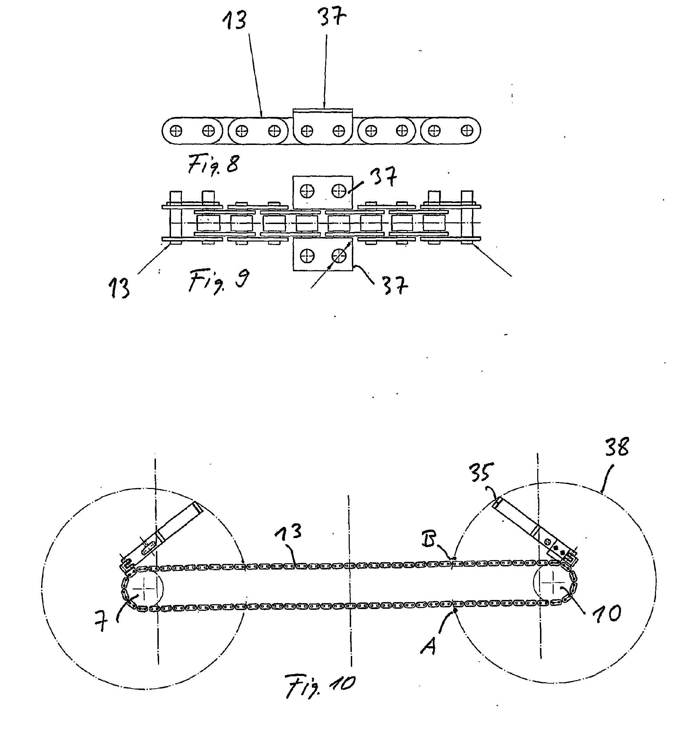

Zum Aufnehmen und Abgeben des Behälters 2 weist das Regalbediengerät zwei Greifmittel 40 und 41 auf, die im Wesentlichen gleich ausgebildet sind und die im Abstand zueinander an den beiden endlosen Antriebsorganen 13 befestigt sind. Die Figur 5 zeigt das Greifmittel 40, das Greifmittel 41 ist aber gleich ausgebildet. An den Enden einer Tragstange 16 ist jeweils ein Träger 33 befestigt, der seinerseits auf zwei Befestigungslaschen 37 befestigt, beispielsweise aufgeschraubt ist. Diese Befestigungslaschen 37 sind gemäss den Figuren 8 und 9 bewegliche Verbindungsteile eines Antriebsorgans 13. Das Antriebsorgan 13 ist gemäss den Figuren 8 und 9 eine an sich übliche Gliederkette. Anstelle der Gliederkette 13 könnte aber auch beispielsweise ein Zahnriemen verwendet werden.

Auf jedem Träger 13 ist ein Greifarm 18 bzw. 24 angeordnet, der um eine Achse 54 bzw. 26 begrenzt schwenkbar ist. Mittels einer Zugstange 17 sind die beiden Greifarme 18 und 24 miteinander verbunden. Die Verbindung der Zugstange 17 zum Greifarm 24 wird durch ein Drehgelenk 25 gebildet. Die Verbindung der Zugstange 17 zum Greifarm 18 erfolgt mit einem Gewindebolzen 32, der in die Zugstange 17 eingeschraubt und mit einer Mutter 34 fixiert ist. Zwischen der Mutter 34 und dem Greifarm 18 ist auf dem Gewindebolzen 32 eine Druckfeder 31 angeordnet, die an der Mutter 34 und am Greifarm 18 abgestützt ist. Der Greifarm 18 besitzt eine Durchgangsbohrung 42, durch welche der Gewindebolzen 32 lose hindurchgesteckt ist.

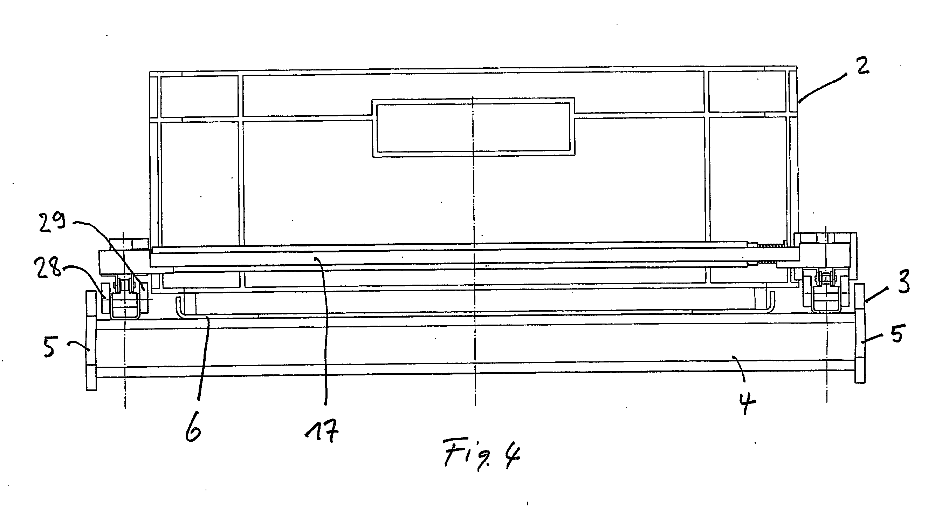

Am Träger 33 ist zudem ein Zugelement 36 angeordnet, das um ein Drehlager 27 schwenkbar ist. Der Gewindebolzen 32 durchgreift das Zugelement 36 und liegt mit einem Kopf 32a aussenseitig am Zugelement 36 an. Am Zugelement 36 und auch am Greifarm 18 ist mit Befestigungsschrauben 30 eine Steuerplatte 28 bzw. 29 befestigt, die jeweils nach unten ragend, wie insbesondere die Figur 4 zeigt. Diese beiden Steuerplatten 28 und 29 wirken zum Verschwenken der beiden Greifarme 18 und 24 mit der Steuerschiene 19 zusammen. Das andere Greifmittel 41 wirkt in gleicher Weise mit der anderen parallel gegenüberliegenden Führungsschiene 19' zusammen.

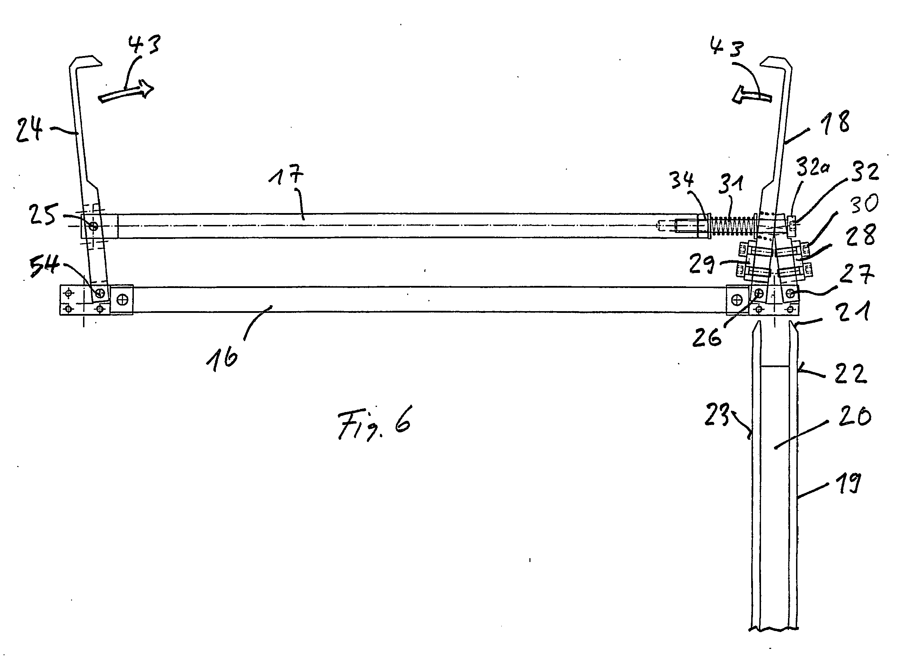

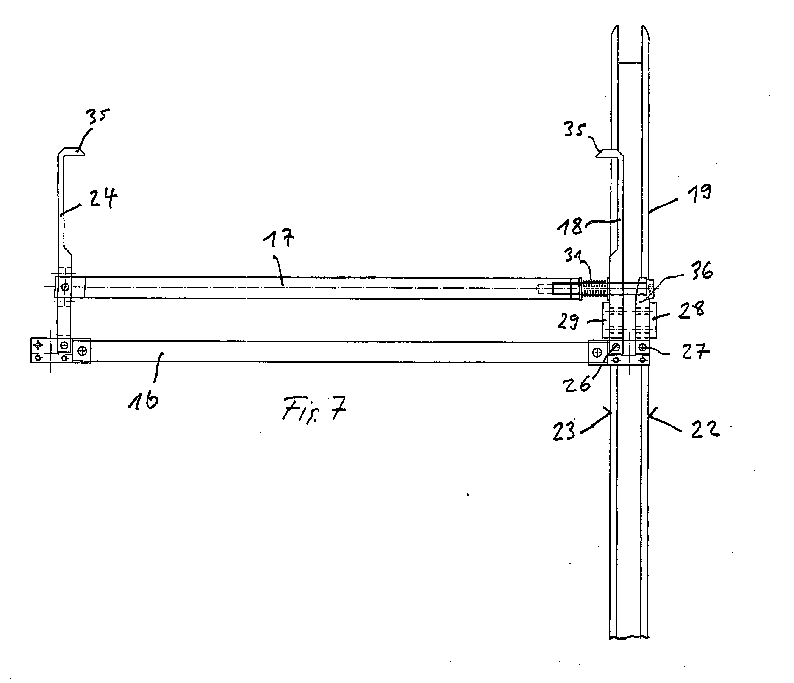

Die Führungsschienen 19 und 19' weisen jeweils einen Kanal 20 auf, der an beiden Enden offen ist und in welchem eines der beiden endlosen Antriebsorgane 13 geführt ist. Mit den Antriebsorganen 13 werden die beiden Greiforgane 40 und 41 bewegt. Durch die Führungsschienen 19 werden die Greifmittel 40 und 41 jeweils nacheinander so betätigt, dass die beiden Greifarme 18 und 24 von der in Figur 6 gezeigten gespreizten Anordnung in Richtung der Pfeile 43 in die in Figur 7 gezeigte parallele Anordnung verschwenkt werden. Dies wird erreicht, indem die beiden Steuerplatten 28 und 29 an die in Figur 6 gezeigten schräg nach aussen verlaufenden Steuerflächen 21 auflaufen und dadurch parallel gestellt werden. Dadurch wird der Greifarm 18 um das Drehgelenk 26 verschwenkt und gleichzeitig wird das Zugelement 36 um das Drehgelenk 27 verschwenkt. Das Zugelement 36 nimmt hierbei den Gewindebolzen 32 mit und dadurch wird mit der Zugstange 17 der andere Greifarm 24 in die parallele Lage verschwenkt. Hierbei wird die Druckfeder 31 gespannt. Im Bereich der Führungsschiene 19 sind die beiden Steuerplatten 28 und 29 ausseriseitig an Steuerflächen 22 bzw. 23 angelegt. Im Bereich der Führungsschiene 19 sind somit die beiden Greifarme 18 und 24 gemäss Figur 7 parallel zueinander ausgerichtet. Am anderen Ende der Führungsschiene 19 sind die beiden Steuerplatten 29 und 28 wieder frei und durch den Druck der gespannten Feder 31 können diese wieder in die in Figur 6 gezeigte Lage verschwenkt werden. Die beiden Greifarme 18 und 24 werden damit wieder aufgespreizt. Beim Auffahren auf diese sich horizontal erstreckende Führungsschiene 19 bzw. Führungsschiene 19' führen die Greifarme 18 und 24 eine zangenartige Schliessbewegung aus. Beim Verlassen der Führungsschiene 19 bzw. 19' wird in Gegenbewegungen die Zange wieder geöffnet. Befinden sich die Greifmittel 40 bzw. 41 ausserhalb des Bereiches der Führungsschiene 19 bzw. 19', so sind die Greifarme 18 und 24 gemäss Figur 6 geöffnet. Das genannte Öffnen und Schliessen erfolgt jeweils an den Enden der Führungsschiene 19 und 19', und zwar jeweils dann, wenn die Greifarme 18 und 24 horizontal ausgerichtet sind.

An den beiden Greifarmen 18 und 24 ist jeweils am freien Ende ein nach innen ragender Greiffinger 35 angeformt. Diese Greiffinger 35 werden beim Verschwenken der Greifarme 18 und 24 jeweils zueinander hin bzw. voneinander wegbewegt. Der Abstand zwischen den Greiffingern 35 wird somit verkleinert bzw. vergrössert. Die Greiffinger 35 können unterschiedlich ausgebildet sein. Grundsätzlich wäre auch eine Ausführung denkbar, bei welcher die Greiffinger 35 durch Reibplatten oder Magnete oder dergleichen ersetzt sind.

Anhand der Figuren 11a bis 11e wird die Arbeitsweise des erfindungsgemässen Regalbediengerätes näher erläutert.

In der Figur 11a ist ein Behälter 2 zum Aufnehmen bereit. Die beiden Greifmittel 40 und 41 befinden sich ausserhalb des Bereiches der Führungsschienen 19 bzw. 19' und sind damit gemäss Figur 6 geöffnet. Werden nun aus dieser Ruhestellung die endlosen Antriebsorgane 13 in Richtung des Pfeils 45 angetrieben, so laufen die beiden Greifmittel 40 und 41 in der gleichen Richtung mit und erreichen schliesslich die in Figur 11b gezeigte Anordnung, in welcher diese sich horizontal erstrecken. Das Greifmittel 40 ist hierbei noch nicht in Eingriff mit der Führungsschiene 19 und die beiden Greifarme 18 und 24 sind somit weiterhin gemäss Figur 6 geöffnet. Die beiden Greiffinger 35 sind jeweils vor einer Rippe 39 des Behälters 2 angeordnet. Diese Rippen 39 erstrecken sich vertikal und sind seitlich vorragend.

Bei einer Weiterbewegung kommt nun das Greifmittel 40 in Eingriff mit der Führungsschiene 19 und dadurch werden die beiden Greifarme 18 und 24 verschwenkt und die in Figur 7 gezeigte geschlossene Stellung gebracht. Die beiden Greiffinger 35 werden somit nach innen gegen den Behälter 2 bewegt. Sie hintergreifen schliesslich jeweils eine Rippe 39 und liegen an dieser an. Damit ist der Behälter 2 vom Greifmittel 40 gefasst und wird schliesslich auf das Regalbediengerät 1 aufgenommen, bis die in den Figuren 1 und 11e gezeigte Position erreicht ist. In der Position gemäss Figur 11d wird das Greifmittel 41 um die Achse 10 bewegt und kommt schliesslich in den Eingriff mit der Führungsschiene 19'. Die Greifarme 18' und 24' werden damit ebenfalls zangenartig geschlossen und erfassen schliesslich in der Stellung gemäss Figur 11e den Behälter 2. Der Behälter 2 ist damit auf das Regalbediengerät 1 aufgenommen und ist von den beiden Greifmitteln 40 und 41 gehalten. Die Stange 17 des Greifmittels 41 liegt in Fig. 11e an der Rückseite des Behälters 2 an. Beim weiteren Transport stösst die Stange 17 den Behälter 2 vom Regalbediengerät. Ist das Regalbediengerät entladen, kann es zu einem weiteren Behälter geladen werden. Der Behälter 2 kann nun mit dem Fahrzeug an die gewünschte Stellung transportiert werden.

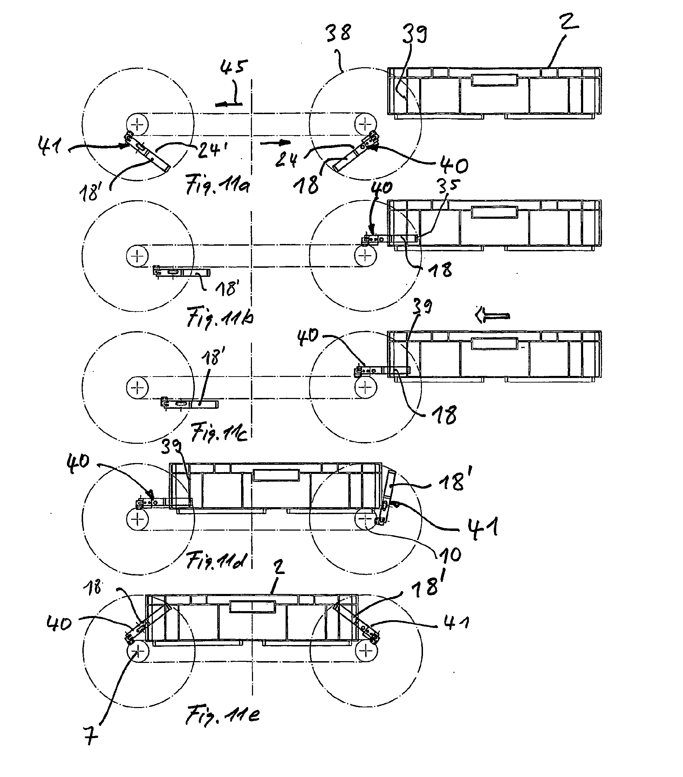

Zum Abgeben des Behälters 2 werden die Antriebsorgane 13 wieder bewegt, sodass der Behälter 2 in Figur 11e wahlweise nach links oder nach rechts bewegt wird. Bewegt sich der Behälter 2 in Figur 11e nach links, so öffnet zuerst das Greifmittel 40. Erreicht das Greifmittel 41 die Antriebswelle 7, so wird auch dieses Greifmittel 41 geöffnet und damit der Behälter freigegeben. Wird der Behälter 2 in Figur 11e nach rechts bewegt, so öffnet zuerst das Greifmittel 41 und schliesslich das Greifmittel 40. Bei beiden zangeförmigen Bewegungen beschreiben die Greiffinger 35 jeweils eine kreisförmige Bahn 38, wie dies in Figur 10 mit einer gestrichelten Linie 38 angedeutet ist. Aufgrund der zangenförmigen Bewegung der Greifarme 18 und 24 ist eine solche kreisförmige Bahn jedoch nicht zwingend. Die Greifarme 18 und 24 könnten auch parallel geführt sein. Die beiden Endpunkte dieser Bahnen sind in Figur 10 mit A und B angedeutet. Befinden sich die Greiffinger 35 im Bereich der Endpunkte A und B so sind die Greifarme 18 und 24 horizontal ausgerichtet. Ausserhalb dieser Positionen verlaufen die Greifarme 18 und 24 bzw. 18' und 24' tangential zur Antriebswelle 7 zur Achse 10.

Um den Behälter 2 wie oben erläutert aufzunehmen und abzugeben, sind an diesen lediglich Rippen 39 oder Ausnehmungen erforderlich, die seitlich vorstehen. Solche Rippen 39 weisen die meisten handelsüblichen Behälter auf, die für Lagergestelle vorgesehen sind. Grundsätzlich können die Rippen 39 auch durch Öffnungen oder Vertiefungen ersetzt sein. Grundsätzlich ist es auch möglich, den Behälter 2 reibschlüssig zu fassen. Dies ist dann erforderlich, wenn die Aussenseite des Behälters eben ist. Die Greiffinger 35 könnten in diesem Fall durch eine Gummiplatte oder dergleichen ersetzt sein. Schliesslich ist eine Ausführung denkbar, bei welcher die Greifmittel 40 und 41 jeweils lediglich einen Greifarm 18, 18' bzw. 24, 24' aufweisen und der Behälter 2 an der gegenüberliegenden Seite geführt ist.

## Patentansprüche

1. Regalbediengerät zum Ein- und Auslagern von Behältern (2) oder Paletten eines Regals, mit wenigstens einem endlosen Antriebsorgan (13), das um zwei im Abstand zueinander angeordnete Räder (11, 12) geführt ist und einen oberen Trum und einen unteren Trum aufweist und an dem wenigstens ein Greifmittel (40 ,41) zum Fassen eines Behälters (2) oder einer Palette befestigt ist, wobei das Greifmittel (40, 41) zangenartig ausgebildet und so geführt ist, dass es zum Fassen des Behälters (2) bzw. der Palette eine seitliche Bewegung ausführt, **dadurch gekennzeichnet, dass** am Antriebsorgan (13) zwei Greifmittel (40, 41) im Abstand zueinander befestigt sind, dass diese beiden Greifmittel (40, 41) mit dem Antriebsorgan (13) um die Räder (11, 12) bewegbar sind und dass ein sich auf dem Regalbediengerät befindlicher Behälter bzw. eine Palette wahlweise nach links oder rechts ein- und auslagerbar ist.

2. Regalbediengerät gemäss Anspruch 1, **dadurch gekennzeichnet, dass** das Greifmittel (40, 41) zwei Greifarme (18, 24; 18', 24') aufweist.

3. Regalbediengerät gemäss Anspruch 2, **dadurch gekennzeichnet, dass** die Greifarme (18, 24; 18', 24') schwenkbar gelagert sind.

4. Regalbediengerät gemäss Anspruch 3, **dadurch gekennzeichnet, dass** die Greifarme (18, 24; 18', 24') an einer Tragstange (16) gelagert sind.

5. Regalbediengerät nach einem der Ansprüche 2 bis 4, **dadurch gekennzeichnet, dass** die Bewegung mittels einer Zugstange (17) von einem Greifarm (18, 28') auf den anderen Greifarm (24, 24') übertragen wird.

6. Regalbediengerät nach einem der Ansprüche 1 bis 5, **dadurch gekennzeichnet, dass** das Greifmittel (40, 41) von einer Führungsschiene (19, 19') betätigt wird.

7. Regalbediengerät nach einem der Ansprüche 1 bis 6, **dadurch gekennzeichnet, dass** die Greifmittel (40, 41) jeweils von einer Führungsschiene (19, 19') betätigt werden.

8. Regalbediengerät nach einem der Ansprüche 1 bis 7, **dadurch gekennzeichnet, dass** die Greifarme (18, 24; 18', 24') jeweils an einem freien Ende Greiffinger (35) aufweisen.

9. Regalbediengerät nach einem der Ansprüche 1 bis 8, **dadurch gekennzeichnet, dass** die Greifmittel (40, 41) wenigstens eine Stange (17) aufweisen, die so positioniert ist, dass sie beim Abgeben des Behälters (2) diesen stösst.

10. Regalbediengerät nach Anspruch 9, **dadurch gekennzeichnet, dass** die Stange (17) eine Zugstange ist, welche eine Bewegung überträgt.

## Claims

1. A storage and retrieval unit for storing and removing from store containers (2) or pallets belonging to a rack, having at least one endless drive element (13) which is led around two wheels (11, 12) arranged at a distance from each other and has an upper run and a lower run and on which at least one gripping means (40, 41) for gripping a container (2) or a pallet is arranged, wherein the gripping means (40, 41) is formed in the manner of tongs and is guided in such a way that it carries out a lateral movement in order to grip the container (2) or the pallet, **characterized in that** at the drive element (13) two gripping means (40, 41) are connected in a distance to each other, that these two gripping means (40, 41) and the drive element (13) are movable around the wheels (11, 12) and that a container (2) or a pallet arranged on the storage and retrieval unit can optionally be moved to the left or to the right for picking up or depositing.

2. The storage and retrieval unit as claimed in claim 1, **characterized in that** the gripping means (40, 41) has two gripping arms (18, 24; 18', 24').

3. The storage and retrieval unit as claimed in claim 2, **characterized in that** the gripping arms (18, 24; 18', 24') are mounted such that they can be pivoted.

4. The storage and retrieval unit as claimed in claim 3, **characterized in that** the gripping arms (18, 24; 18', 24') are mounted on a loadbearing rod (16).

5. The storage and retrieval unit as claimed in one of claims 2 to 4, **characterized in that** the movement is transmitted from one gripping arm (18, 28') to the other gripping arm (24, 24') by means of a tie rod (17).

6. The storage and retrieval unit as claimed in one of claims 1 to 5, **characterized in that** the gripping means (40, 41) is actuated by a guide rail (19, 19').

7. The storage and retrieval unit as claimed in one of claims 1 to 6, **characterized in that** two gripping means (40, 41) are provided, which are each actuated by a guide rail (19, 19').

8. The storage and retrieval unit as claimed in one of claims 2 to 7, **characterized in that** the gripping arms (18, 24; 18', 24') in each case have a gripping finger (35) at a free end.

9. The storage and retrieval unit as claimed in one of claims 1 to 8, **characterized in that** the gripping means (40, 41) have at least one rod (17) which is positioned such that it pushes the container (2) as the latter is deposited.

10. The storage and retrieval unit as claimed in claim 9, **characterized in that** the rod (17) is a tie rod which transmits a movement.

## Revendications

1. Transstockeur pour le stockage et le déstockage de récipients (2) ou de palettes d'un rayonnage, comprenant au moins un organe d'entraînement sans fin (13), qui est guidé autour de deux roues (11, 12) disposées à distance l'une de l'autre et qui présente un tronçon supérieur et un tronçon inférieur et sur lequel au moins un moyen de préhension (40, 41) est fixé pour saisir un récipient (2) ou une palette, le moyen de préhension (40, 41) étant réalisé en forme de pince et étant guidé de telle sorte qu'il exécute un déplacement latéral pour saisir le récipient (2) ou la palette, **caractérisé en ce que** deux moyens de préhension (40, 41) espacés l'un de l'autre sont fixés sur l'organe d'entraînement (13), **en ce que** ces deux moyens de préhension (40, 41) peuvent être déplacés avec l'organe d'entraînement (13) autour des roues (11, 12) et **en ce qu'**un récipient ou une palette se trouvant sur le transstockeur peut être stocké et déstocké au choix vers la gauche ou vers la droite.

2. Transstockeur selon la revendication 1, **caractérisé en ce que** le moyen de préhension (40, 41) présente deux bras de préhension (18, 24 ; 18', 24').

3. Transstockeur selon la revendication 2, **caractérisé en ce que** les bras de préhension (18, 24 ; 18', 24') sont montés à pivotement.

4. Transstockeur selon la revendication 3, **caractérisé en ce que** les bras de préhension (18, 24 ; 18', 24') sont montés sur une barre porteuse (16).

5. Transstockeur selon l'une quelconque des revendications 2 à 4, **caractérisé en ce que** le mouvement est transmis au moyen d'une barre de traction (17) d'un bras de préhension (18, 18') à l'autre bras de préhension (24, 24').

6. Transstockeur selon l'une quelconque des revendications 1 à 5, **caractérisé en ce que** le moyen de préhension (40, 41) est actionné par un rail de guidage (19, 19').

7. Transstockeur selon l'une quelconque des revendications 1 à 6, **caractérisé en ce que** les moyens de préhension (40, 41) sont actionnés à chaque fois par un rail de guidage (19, 19').

8. Transstockeur selon l'une quelconque des revendications 1 à 7, **caractérisé en ce que** les bras de préhension (18, 24 ; 18', 24') présentent à chaque fois des doigts de préhension (35) sur une extrémité libre.

9. Transstockeur selon l'une quelconque des revendications 1 à 8, **caractérisé en ce que** les moyens de préhension (40, 41) présentent au moins une barre (17) qui est positionnée de telle sorte qu'elle vienne buter contre le récipient (2) lorsque celui-ci est déchargé.

10. Transstockeur selon la revendication 9, **caractérisé en ce que** la barre (17) est une barre de traction qui transmet un mouvement.
